# EUROPEAN PATENT APPLICATION

(11) **EP 2 009 704 A2**
(43) Date of publication of application: **31.12.2008**
(21) Application number: 07024690.5
(22) Date of filing: 20.12.2007
(51) Int. Cl.: H01L 31/048, F24J 2/52, E04D 13/18

(54) **Modular panel for ventilated cladding of roofs integrating an interchangeable module having photovoltaic cells or a heat exchanger with modules connected in succession on a combined roof system**

(30) Priority: 25.06.2007 IT TV20070113
(71) Applicant: SOLEYA SRL, 31017 Crespano del Grappa (TV) (IT)
(72) Inventor: Pietrobon, Silvano, 31017 Crespano Del Grappa (TV) (IT)
(74) Representative: Massa, Patrizia

(57) **Abstract**

Modular panel for ventilated cladding for roofs that integrates an interchangeable module having photovoltaic cells or a heat exchanger with modules that can be connected in succession in a combined roof system; at least one first modular panel consists of a base and a removable frame made of plastic material or a mixture based on resin and mineral substance granules, such as stone, marble, cement, metal or quartz; the base is provided with support feet thus obtaining perpendicular ventilating channels, and the frame internally defines a seat to house the photovoltaic module or the heat exchanger, provided with relative means to interconnect with at least one second module of the second panel contiguous to the first panel, the second module being contained on the interior of the second panel similar to the first and with respect to which the first panel is engaged by overlapping at least two sides contiguous to the contiguous edges of the second adjacent panel:

## Description

This invention relates to a modular panel for ventilated cladding for roofs that integrates an interchangeable module having photovoltaic cells or a heat exchanger with modules that connect in succession on a combined roof system.

In principle, the use of photovoltaic cells for the production of electric energy for household use is known. Such means are usually placed on the roof of the house, or of the building in general, and they transform the solar energy received into direct electric current that is subsequently activated with an inverter and transformed into alternating current, for example for domestic use.
Introduced many years ago into a multitude of technologies both as a source of energy, often subordinated to that generated traditionally, as well as in its capacity as a primary source, even if aimed exclusively at certain, particular tasks, the photovoltaic cell is a part of a more complex system in continuous development. Every cell, in collaboration with others of the same type, therefore forms a photovoltaic system that consists of a set of mechanical, electronic and electrical components that work together to collect and transform the solar energy available, transforming it into electric energy that may be exploited by the user. Although this system has been know for over one hundred years in the field of scientific applications, it is only in recent years that it has been more widely used in other sectors. Amongst these, a niche market has grown around equipment for buildings in general, such as for example houses, in which the solar panel is gaining increasingly more recognition from the public for the multiple advantages that it is usually able to offer.

The energy produced in this way, for example, can be directly used for the domestic grid or for the supply of the water-sanitary distribution system, or for the heating of water for household use.

### Prior Art

US5293447 (Fanney et al.) describes a photovoltaic panel that sends the electric energy transformed from solar energy to a control module that in turn sends the electric energy to resistors placed on the interior of a water deposit tank that heats the water for its subsequent use in the home.

Technical solutions are also known in which each unit is provided with an individual water collector that will fill a hot water deposit tank. GB2299662 (Hoang) and GB2407634 (Davies et al.) describe this technique in which the individual cladding module comprises photovoltaic cells joined to the water-containing duct, said module to be positioned on the cladding of the building, and is attached to a possible cylindrical container placed at the top of the cladding layer on the ridge; under the force of gravity the hot water subsequently runs through the pipes placed under the photovoltaic cells and reaches said water deposit tank. Part of the electric energy obtained is used for the pumping system of the water to the roof while the remaining part instead goes to the domestic grid.

There are also varying technical solutions that provide combined systems including photovoltaic cells for the production of electrical current, coupled with a series of pipes containing water that is heated as a result of solar irradiation, producing hot water that may be used in the home.

The flat interlocking tile is also known for making ventilated cladding, therefore in the same way as couples provided with lower feet that allow part of the intrados to remain separated from the floor. The characteristic rectangular form, seen in a plan view, provides the shape of two longitudinal and parallel channels divided from each other by a rib, said canals being open in correspondence with the side directed downstream of the tile. The portion of the tile, along the edges, namely at least in the proximity of the entrances upstream of the two channels, provides an overhanging surface, almost coplanar with the tile portion that is found alongside at least one of the two channels and along which longitudinal and parallel seats are obtained. The opposite side provides a lowered portion with respect to the surface that involves the side upstream and one side of the tile and has raised two ribs, these also being parallel. Finally, along the lower side of the tile, that rests on the floor, in correspondence with the two channels placed above, the counter-shaped tapered surfaces are intended to project from the tile and they are also coplanar, each acting as a support foot on the floor. During the installation of a terracotta cladding, two contiguous sides of the peripheral edge of the flat interlocking tile are placed underneath similar adjacent tiles, while a third and a fourth are intended to be placed above respectively along the side of the tile next to it and along the head of the tile downstream.

Subsequent ideas have been drawn from this first solution and more recent proposals have been made that propose the structures of tiles to which a photovoltaic cell will be joined. For example, US5990414 (Posnansky) describes a photovoltaic roof in which a corresponding photovoltaic cell is joined, above an already existing cladding cement fibre structure, to each tile, said cell being connected in succession with other cells that cover all the other tiles thus allowing the formation of a collection surface. In this case the solar cell is simply superimposed and anchored to an existing tile by means of adhesive or clips.

A tile is described in WO00/75455 (Kaneka), which on one side and across its entire surface, is provided with a recess on the interior of which connector means are provided. In this way the solar cell can be introduced and vice-versa into said recess, allowing the insertion of the socket with said connector means.

DE4408508 (Feldmann et al.). This describes panels, in the form of flat tiles, for roof claddings on tilted surfaces, essentially consisting of a reinforced fibreglass frame. In this case the solar cells are connected to an underlying glass sheet, supported by the aforementioned frame. A glass sheet also appears in one case to be fitted into the frame, which along the lateral edges is of the type provided with a series of notches in order to allow the superimposition of the edges of an adjacent tile to prevent the entry of water.

CH682831 (Von Burg, et al.) also concerns a flat tile, made from clay or another natural material, shaped in such a way as to provide the two opposite, lateral edges that are notched to be superimposed in such a way that the continuity of the cladding along the layer surface is permitted. At least one solar cell is mounted along the upper side in such a way as to be controlled in the position individually.

DE19619369 (Saga) describes a flat tile, which makes provision for at least one of its edges to be superimposed with an adjacent tile. A cavity is provided along the central portion of the tile, from which the feet emerge that form a single unit with the tile. Said feet serve the purpose, on the interior of the recess, of maintaining a solar cell raised with respect to the base of said recess, said cell enjoying the benefit of the underlying channel for the passage of the conductor means.
ITUD2003A000172 (Ferronato) describes a process for the realisation of a cover panel that reproduces the visible surface of buildings made of stone, brick, wood or other materials and a panel obtained in this way, in which provision is made to pour at least a mixture based on mineral substance granules, such as stone, marble, quartz or metal cement, into an open die, the bottom of which presents the visible surface to be obtained. The mixture is of the type that comprises a polyester resin, a binding agent and a catalyst. The mixture can moreover provide a colouring substance with a base of iron oxide.

Taking into consideration the above, the following are reasonably known:
- panel solutions for realising roof claddings that provide photovoltaic cells that transform solar energy into electric energy, in part used for the domestic grid and in part for heating water for subsequent household use;
- modular panel solutions joined to each other that comprise a pipe or exchanger also particularly of the pigmented type, inside which a heated fluid flows due to the radiant solar energy and directed towards a heat recovery circuit;
- modular frames that integrate the photovoltaic cells and/or the heat exchanger consisting of structural panel elements that are opportunely insulated and sealed, also with a glass sheet provided with selective characteristics, thus allowing the installation of the solar panel with a certain reduction of outward heat loss;
- panels are known that allow photovoltaic cells to be interchanged;
- panels are known of the type that reproduce the visible surface of buildings in stone, brick, wood or other materials and a panel obtained in this way, in which provision is made to pour at least one mixture with a base of resin and mineral substance granules, such as stone, marble, quartz or metal cement, into an open die, the bottom of which has the shape of the visible surface to be obtained.

The described solutions highlight certain limits that can substantially be considered due to the fact that the user, after having installed the roof cladding surface, will not be able to modify the layout in order to adapt it to specific and changing needs. In other words, in the case where the installed roof is of the type with thermal solar panels, it is not possible to modify their composition, it is only possible to carry out a specific intervention to replace all the thermal solar panels with other panels, for example with photovoltaic panels. The same is true for the inverse hypothesis. In some cases, it is noted that the problem can be solved using mixed type panels, namely panels that integrate both the photovoltaic and thermal function. However, it is obvious that this solution, at present due to the complexity and delicacy that said system requires, is not particularly convenient and moreover involves considerable economic cost. In addition to that disclosed, each panel must integrate both functions that results in panels with considerable dimensions and limited performance from an equal exposed surface, with the panels of either type. Also the maintenance in some cases appears to be particularly difficult to carry out as it requires a certain practicality with regular interventions in order to ensure satisfactory performance. A final disadvantage relates to the aesthetic factor, considering that both thermal and photovoltaic panels use frames that are not integrated optimally into the aesthetic context of the building.

From that mentioned above it is possible to understand how essential it is to identify alternative solutions that avoid the aforementioned drawbacks.

This and other aims are achieved by means of the present invention according to the characteristics of the included claims that solve the arising problems by means of a modular panel for a ventilated roof cladding that integrates an interchangeable photovoltaic cell module or a heat exchanger with modules that can be connected in succession on a combined roof system; at least one first modular panel consists of a base and a removable frame made of plastic material or a mixture with a base of resin and mineral substance granules, such as stone, marble, quartz or metal cement, in which the base is provided with support feet on the concrete layer of the roof thus obtaining ventilating channels that are perpendicular with respect to each other, and the frame internally defines a seat to house the module with photovoltaic cells or heat exchanger, provided with relative means to be interconnected with at least one second module of the second panel contiguous to the first panel, the second module being contained on the interior of the second panel similar to the first with respect to which the first panel is engaged by overlapping at least two sides contiguous to the contiguous edges of the second adjacent panel.

### Aims

In this way, by means of the considerable creative contribution, the effect of which constitutes immediate and significant technical progress, varied and important aims are achieved.

A first aim was to obtain an extremely versatile modular panel that could easily be assembled at the user's discretion in the heat exchanger or photovoltaic version, with quick installation times and low costs requiring fewer warehouse codes. The particular form of the panel allows, moreover, the quick installation of the roof system, thus implementing the benefits produced as a result of the ventilating function achieved through the particular shape of the base of the panel.
A second aim consists in the particular possibility of providing panels that can be integrated harmoniously into the aesthetic context of the building, said panels having limited dimensions that are aesthetically pleasing for the valuable surface finishing and that are combined optimally in the photovoltaic and heat exchanger versions, thus realising a practical roof system according to the effective energy needs of the user.

A third aim also relates to the ease of maintenance, namely the possibility of being able to intervene, when necessary, on each panel with the removal of the individual module, without necessarily having to replace the panel. The use of a possible microchip for each panel intends to indicate the correct functioning or the malfunction of said panel, allowing a precise and quick intervention with respect to the panel involved, thus restoring the optimal performance of the roof system.

In conclusion, these advantages have the significant value of providing a modular panel for roof cladding with good technological content, fast installation, functional performance, high level of reliability and with reduced maintenance.

These and other advantages will appear from the following detailed description of a preferred solution with the aid of the enclosed schematic drawings whose execution details are not to be considered limitative but only and exclusively illustrative.

### Content of the Drawings

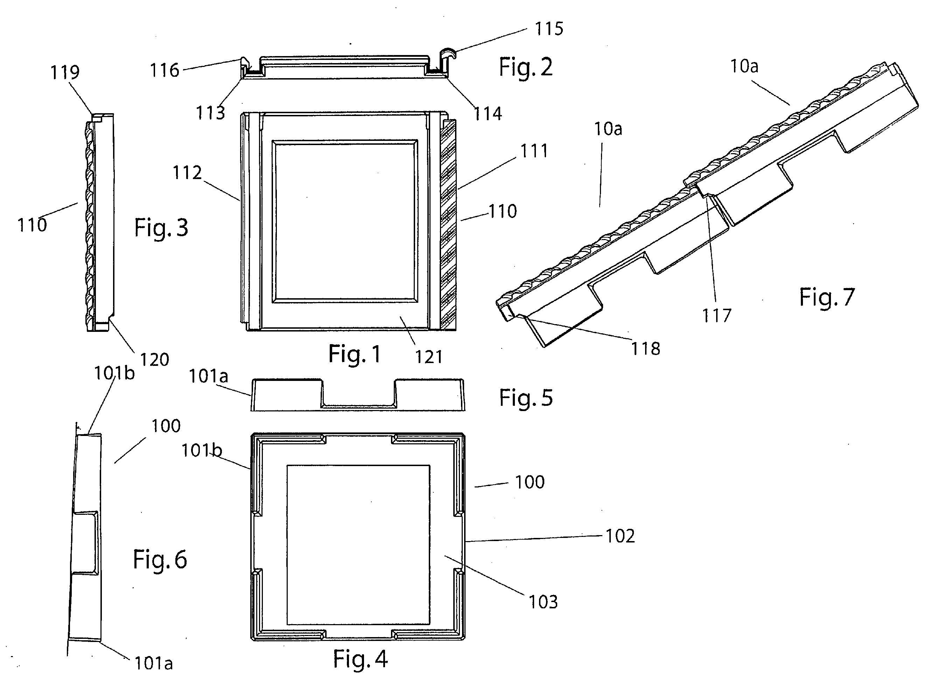

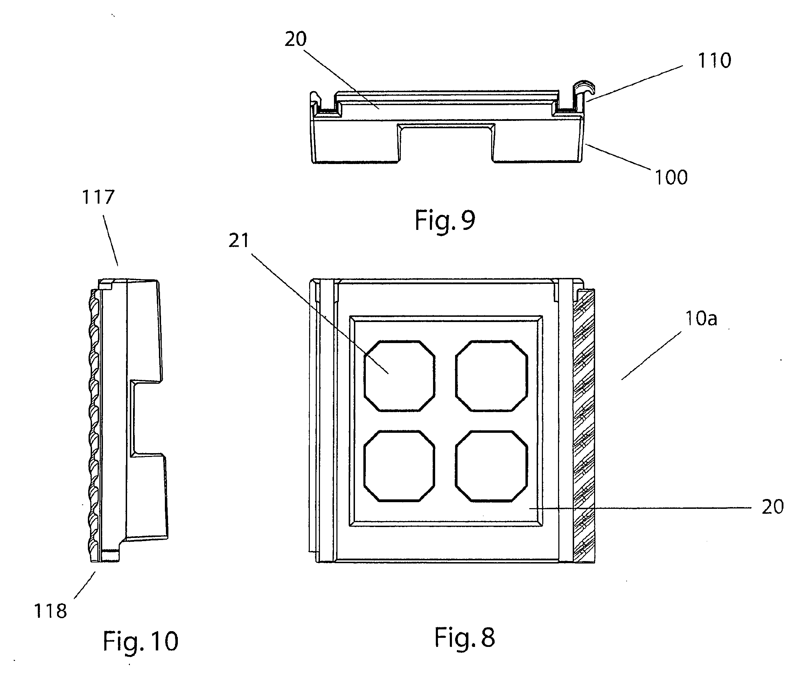

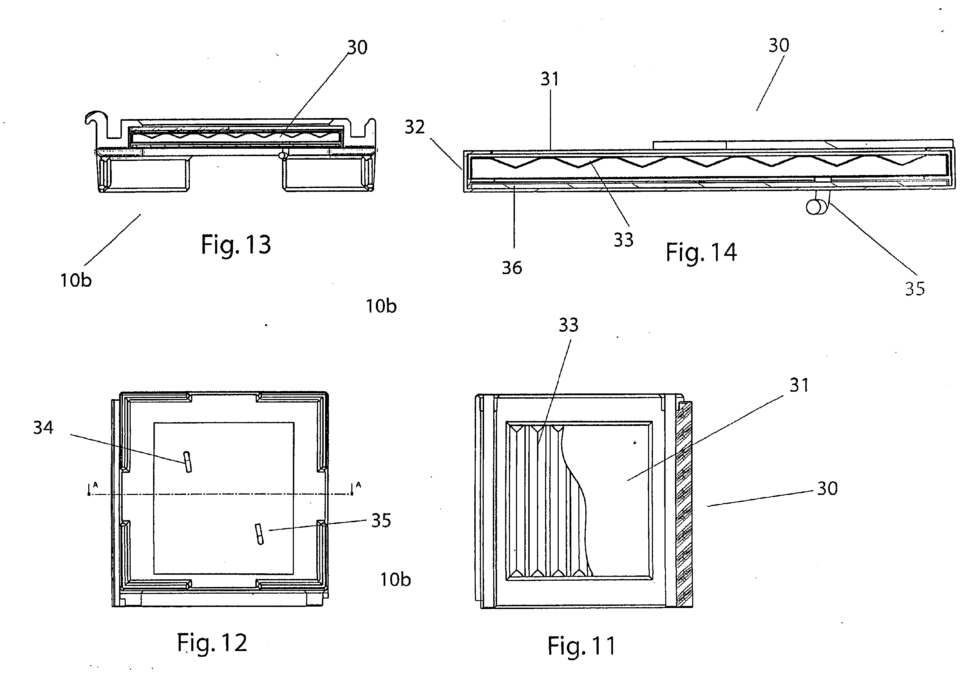

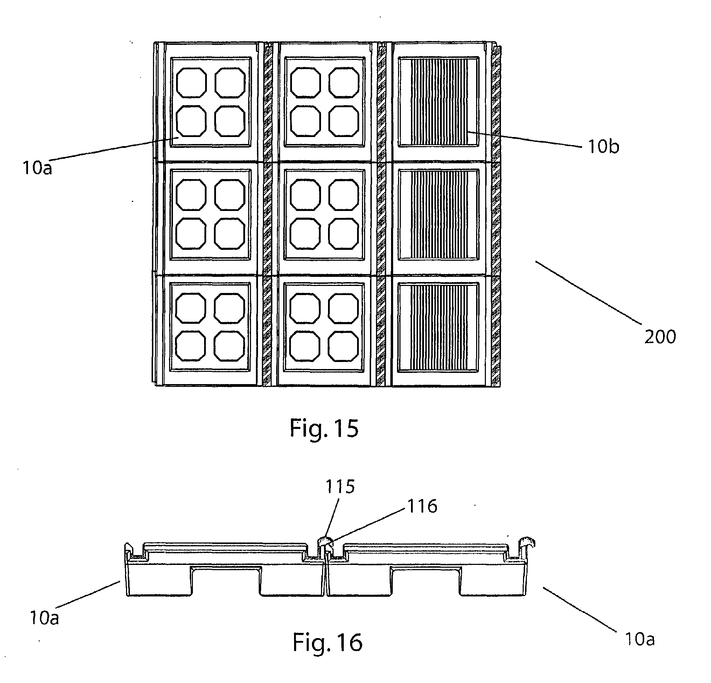

□ Figure 1 is a plan view from above of the modular panel frame;
□ Figure 2 is a view from underneath of the frame in Figure 1;
□ Figure 3 is a view from the right of the frame in Figure 1;
□ Figure 4 is a plan view from the lower side of the modular panel base;
□ Figure 5 is a view from underneath of the base in Figure 4;
□ Figure 6 is a view from the right of the base in Figure 4;
□ Figure 7 is a view from the right of a roof system obtained by joining at least two modular panels that are the object of this invention;
□ Figure 8 is a front view of the modular panel with a photovoltaic module;
□ Figure 9 is a view from underneath of the panel in Figure 8;
□ Figure 10 is a side view from the right of the panel in Figure 8;
□ Figure 11 is a front view of the modular panel with a heat exchanger module;
□ Figure 12 is a lower plan view of the panel in Figure 11;
□ Figure 13 is a view from underneath of the panel in Figure 11;
□ Figure 14 is a side view of the heat exchanger module;
□ Figure 15 is a front view of the combined roof system with modular panels;
□ Figure 16 is a top view of the roof system in the previous Figure, with the modular panels placed laterally alongside each other.

### Embodiment of the Invention

The present solution refers to a modular panel **10a** and **10b** respectively, the modular panel **10a** having a photovoltaic module 20 (Fig. 8), the modular panel **10b** having a heat exchanger module 30 (Fig. 11). The modular panel **10a** and **10b** includes a base **100** and an upper frame **110,** coupled together by means of superimposition and peripheral adhesion, for example by means of silicone. The photovoltaic module **20** or the heat exchanger module **30** is joined between the base **100** and the frame **110.**

Both the base **100** as well as the frame **110** are made from composite plastic material, such as for example a mixture with a base of resin and mineral substance granules, such as stone, marble, quartz or metal cement, cast in an open die the bottom of which presents the shape to be obtained of the visible surface of the modular panel **10a** and **10b** for the roof cladding. Alternatively, the base **100** and the frame **110** are obtained by means of injection moulding with glass reinforced composite plastic material. The base **100** presents a shape that from the beginning is essentially quadrilateral, in this case square, (Fig. 4) with a lower surface that is provided in correspondence with the angles of four angular feet **101a** and **101b** with pyramidal section, each one developing in a square shape along the perimeter of the base **100,** separated from each other by openings **102** through which the airflow passes for the ventilation of the cladding. The angular feet **101a** correspond to the feet placed downstream of the modular panel **10a** and **10b** and as they are of a greater height than the angular feet **101b** that vice-versa are upstream of the modular panel **10a** and **10b** they must allow the superimpositioning of the head between the same (Fig. 7). The upper part of the base **100** provides a flat panel **103** projecting towards the interior of the base itself **100,** defining a support surface for the photovoltaic module **20** or for the heat exchanger module 30.

The frame **110** (Fig 1) presents a quadrilateral shape analogously to the base **100**, in correspondence with the sides **111** and **112** that has two rectilinear and parallel channels **113** and **114** that have the purpose of allowing rainwater to flow out. The side **111** is provided, on the side of channel **114,** with a rectilinear wing **115** that projects orthogonally with respect to the wall of the channel **114**, with the extrados being convex while the intrados is counter-shaped with respect to a rectilinear tooth **116** that is obtained on the opposite side in correspondence with the side **112.** The frame **110** also has two heads **117** and **118,** respectively one upstream and one downstream. With regard to the head upstream **117**, this is provided with an indentation **119** while the downstream head **118** is provided with a projecting tooth **120.** In this way, in order to allow the connection in succession from downstream to upstream of two modular panels **10a** or **10b** in a roof system **200** (see Figs. 7 and 15), the superimposition of the projecting tooth **120** of the first panel to the indentation **119** of the second panel is obtained. In the same way, the side connection between the modular panels **10a** or **10b** is carried out by superimposing the rectilinear wing **115** of the first panel on the relative rectilinear tooth **116** of the adjacent and second panel.

With regard to the photovoltaic module **20** that is introduced into the panel **10a** (Fig. 8), it is noted that this consists of a square made of aluminium or plastic material that defines a box, closed on the upper part by tempered glass and on the lower part by a sheet on the back made of TEDLAR-type material. In the interior of said module, four single-crystal silicon wafer photovoltaic cells **21** are housed. Furthermore, the module is also provided with a connection box with bypass diodes and completely insulated polarity connectors (not illustrated). The module **20,** in this case is housed in the interior of the seat obtained in the frame **110,** being arranged in abutment with the internal wall that defines the drainage channels **113** and **114,** while on the upper part it is held along the edge by a peripheral panel **121** that develops along the four internal sides of the frame **110.**

In relation to the heat exchanger module **30** (Fig 14), it is observed that this is substantially made up of a sheet of glass **31,** an aluminium box-like container **32,** a copper container **33** with the upper part being notched in order to increase the collection surface and the lower part having two pipes **34** and **35** provided with fast connections for the inflow and outflow of the cooling liquid, a lower layer **36** with high insulating power, for example ASPE-AEROGELS, and finally copper thermal connectors provided with completely insulated fast connections.

In a preferred solution, the roof system **200** (Fig. 15) comprises modular panels **10a** and **10b** connected in succession in two different groups, arranged one after another and positioned adjacently in such a way as to create areas involved by modular panels **10a** next to areas involved by modular panels of the type **10b**.

Moreover, each modular panel **10a** and **10b** can be provided with a microchip that communicates with a remote control and service logic unit with the aim of highlighting possible anomalies in the roof system **200** and in the individual modular panel **10a** and **10b**.

### Reference

**10a** modular panel with photovoltaic module
**10b** modular panel with heat exchanger module
**20** photovoltaic module
**30** heat exchanger module
**100** base
**110** upper frame
**101a** and **101b** angular feet
**102** openings
**103** flat panel
**111** and **112** sides
**113** and **114** rectilinear and parallel channels
**115** rectilinear wing
**116** rectilinear tooth
**117** and **118** heads
**119** indentation
**120** projecting tooth
**200** roof system
**21** photovoltaic cells
**31** glass
**32** aluminium box-like container
**33** copper container
**34** and **35** cooling liquid inflow and outflow pipes
36 lower layer with high insulating power

## Claims

1. Modular panel for ventilated cladding for roofs **characterised in that** it integrates an interchangeable module, photovoltaic **20** or heat exchanger **30,** that can be connected in succession with modules having the same characteristics in a combined roof system **200,** said modular panel **10a** and **10b** consisting of a base **100** to which a removable frame **110** is joined.

2. Modular panel for ventilated cladding for roofs according to claim 1, **characterised in that** the base **100** is provided with support feet **101a** and **101b** on the concrete layer of the roof thus obtaining ventilating channels, the frame **110** internally defines the housing seat of the photovoltaic cell module **20** or of the heat exchanger module **30,** provided with relative means to, be interconnected with at least one second module with the same characteristics of a second panel contiguous to the first.

3. Modular panel for ventilated cladding for roofs according to claim 1 and 2, **characterised in that** the base **100** presents a shape from the beginning that is essentially quadrilateral, with a lower surface that is provided in correspondence with the angles of four angular feet **101a** and **101b** with a pyramidal section, each one developing in a squared way along the perimeter of the base **100,** separated from each other by openings **102** through which airflow for the ventilation of the cladding passes, and in which the angular feet **101a** placed downstream of the modular panel **10a** and **10b** have a greater height with respect to the angular feet **101b** upstream of the modular panel **10a** and **10b** and furthermore in which a flat panel **103** is provided projecting towards the interior of the base itself **100.**

4. Modular panel for ventilated cladding for roofs according to the previous claims, **characterised in that** the frame **110** presents a quadrilateral shape, in correspondence with the sides **111** and **112** that have two rectilinear and parallel channels **113** and **114**, and in which the side **111** is provided, on the side of the channel **114**, with a rectilinear wing **115** that projects orthogonally with respect to the wall of the channel **114,** with the extrados being convex while the intrados is counter-shaped with respect to a rectilinear tooth **116** that is obtained on the opposite side in correspondence with the side **112,** said frame **110** having two heads **117** and **118,** respectively one upstream and one downstream, the first provided with an indentation **119** while the second is provided with a projecting tooth **120.**

5. Modular panel for ventilated cladding for roofs according to the previous claims, **characterised in that** the photovoltaic module **20** is found in the panel **10a** and consists of an aluminium or plastic material panel that defines a box, closed on the upper part by tempered glass and on the lower part on the back by a TEDLAR-type material, and in which four single-crystal silicon wafer photovoltaic cells **21** are positioned on the interior of said photovoltaic module **20,** said module being provided with a connection box equipped with bypass diodes and with completely insulated polarity connectors.

6. Modular panel for ventilated cladding for roofs according to the previous claims, **characterised in that** the heat exchanger module **30** is found in the modular panel **10b** and consists of a sheet of glass 31, an aluminium box-like container **32,** a copper container **33** notched on the upper part to increase the collection surface and on the lower part having two pipes **34** and **35** provided with fast connections for the inflow and the outflow of the cooling liquid, a lower layer **36** with high insulating power, for example ASPE-AEROGELS, and finally with copper thermal connectors equipped with fast and completely insulated connections.

7. Roof system with modular panels according to the previous claims, **characterised in that** the roof system **200** comprises modular panels **10a** and **10b** connected in succession in two different groups, arranged one after the other and adjacent in such a way as to create areas interested by modular panels **10a** next to areas interested by modular panels of the type **10b**.

8. Roof system with modular panels according to the previous claims, **characterised in that** each modular panel **10a** and **10b** is provided with a microchip that communicates with a remote control and service logic unit that identifies possible anomalies in the roof system **200** and in the individual modular panel **10a** and **10b**.

9. Modular panel for ventilated cladding for roofs according to the previous claims, **characterised in that** the base **100** and the frame **110** are obtained from a mixture with a base of resin and mineral substance granules, such as stone, marble, quartz or metal cement, cast in a die, the bottom of which is counter-shaped according to the visible surface to be obtained in correspondence with the visible sides of the panel.

10. Modular panel for ventilated cladding for roofs according to claims 1 to 8, **characterised in that** the base **100** and the frame **110** are obtained from injection moulding with composite reinforced glass plastic material.
